(19) Europäisches Patentamt
European Patent Office
Office européen des brevets

(11) **EP 1 377 630 B1**

(12) **EUROPÄISCHE PATENTSCHRIFT**

(45) Veröffentlichungstag und Bekanntmachung des Hinweises auf die Patenterteilung:
**17.11.2010 Patentblatt 2010/46**

(51) Int Cl.:
*C08J 9/00* (2006.01)      *C08L 33/24* (2006.01)
*C08F 265/04* (2006.01)      *C08F 265/10* (2006.01)

(21) Anmeldenummer: **02718174.2**

(22) Anmeldetag: **05.03.2002**

(86) Internationale Anmeldenummer:
**PCT/EP2002/002365**

(87) Internationale Veröffentlichungsnummer:
**WO 2002/077082 (03.10.2002 Gazette 2002/40)**

(54) **PMI-SIRUPPHASEN UND DEREN VERWENDUNG ZUR STABILISIERUNG NICHT LÖSLICHER ADDITIVE**

PMI SYRUP PHASES AND THEIR USE FOR STABILIZING NON-SOLUBLE ADDITIVES

PHASES SIROP PMI ET LEUR UTILISATION POUR STABILISER DES ADDITIFS NON SOLUBLES

(84) Benannte Vertragsstaaten:
**AT BE CH CY DE DK ES FI FR GB GR IE IT LI LU MC NL PT SE TR**

(30) Priorität: **21.03.2001 DE 10113899**

(43) Veröffentlichungstag der Anmeldung:
**07.01.2004 Patentblatt 2004/02**

(73) Patentinhaber: **Evonik Röhm GmbH 64293 Darmstadt (DE)**

(72) Erfinder:
• STEIN, Peter
  64319 Pfungstadt (DE)
• GEYER, Werner
  64367 Mühltal (DE)
• BARTHEL, Thomas
  64646 Heppenheim (DE)
• BREITWIESER, Franz, Karlheinz
  deceased (DE)

(56) Entgegenhaltungen:
DE-A- 19 917 987      GB-A- 721 641
US-A- 2 921 045      US-A- 5 374 688

## Beschreibung

### Technisches Gebiet der Erfindung

Die Erfindung betrifft

1. PMI-Sirupphasen durch Polymerzusätze

2. Verwendung der oben genannten Phasen zur Stabilisierung nicht löslicher Additive

Die PMI-Sirupphasen werden in einem ersten Schritt polymerisiert und in einem zweiten Schritt geschäumt. Das Schaumprodukt ist unter der Marke Rohacell® bei der Röhm GmbH erhältlich. Rohacell® ist ein geschlossenporiger Schaum, der beispielsweise im Automobilbau und im Flugzeugbau angewendet wird.

### Stand der Technik

Die vorliegende Erfindung erstreckt sich auf das Gebiet der nach dem Gußverfahren hergestellten Polymerblöcke. Hierbei werden die Monomere zwischen zwei planparallelen Platten - meist Glasplatten - verfüllt. Eine Zugabe von nicht löslichen Additiven ist in der Regel nicht möglich, da durch Sedimentation die Verteilung der Additive im Polymerisat inhomogen wird. Eine Lösung dieses Problems ist die Verwendung von hochviskosen Polymerisationsphasen, die im Folgenden als Siruppphasen bezeichnet werden.

Eine Sirupphase zeichnet sich dadurch aus, daß die vor der Polymerisation angesetzte Lösung durch ein bestimmtes Verfahren in der Viskosität deutlich erhöht wird. Bekannt ist hierbei die Anwendung einer Sirupphase in PMMA (Polymethylmethacrylat), wobei anpolymerisiert wird und kontinuierlich Monomer zugegeben wird. Eine solche Phase besteht daher aus einem Monomeranteil und einem Polymeranteil und soll im Folgenden als PMMA-Sirupphase bezeichnet werden. Die Endpolymerisation erfolgt auch in diesem Fall zwischen zwei planparallelen Platten. Durch die Viskositätserhöhung ist es möglich beispielsweise nichtlösliche Farbstoffe, aber auch andere nicht lösliche Additive auf diese Weise in den Reaktionsansatz so einzutragen, daß deren Verteilung homogen ist und keine Sedimentation während der im Gußverfahren durchgeführten Polymerisation erfolgt.

Die Polymerisation und die Aufschäumung stellen zwei getrennte Verfahrensschritte dar. WO90/2621 beschreibt einen Schaum aus (Meth)acrylsäure und (Meth)acrylnitril, wobei Acrylamid als Comonomer verhindert, das bei der Polymerisation vorzeitig Niederschläge entstehen. Der gebildete Schaum ist sehr gleichmäßig, dass Produkt weist keine internen Spannungen auf.

DE 197 17 483 beschreibt ein Verfahren zur Herstellung von Polymethacrylimid-Schaumstoffen, die mit 1-5 Gew.-%, bezogen auf die Monomermischung, MgO versetzt sind. Man erhält Schäume mit deutlich verbesserten thermomechanischen Eigenschaften.

DE 196 06 530 beschreibt den Zusatz eines Flammschutzes mittels Polymethacrylimid-Schaumstoffen. Unter Aerosil versteht man hochdisperse Siliciumdioxide.

Ist in der Literatur bereits eine ausführliche Beschreibung solcher PMMA-Sirupphasen zu finden, bleiben PMI(Polymethacrylimid)-Sirupphasen unerwähnt. Der Begriff der PMI-Sirupphase soll im Folgenden soweit erweitert werden, als daß er Lösungen von einem oder mehreren, beliebigen Polymeren in den zur PMI Herstellung nötigen Monomeren beschreibt.

Die Synthese von nicht substituierten Polymethacrylimiden erfolgt in der Regel durch eine Copolymerisation von Methacrylnitril und Methacrylsäure. Das als Zwischenprodukt erhaltene, nicht cyclisierte bzw. imidisierte Präpolymer ist nicht in seinen Monomeren löslich. Dadurch verbietet sich die Herstellung eines Sirups auf die oben beschriebene Weise, d.h. durch anpolymerisieren.

Bisher ist die Einarbeitung von nichtlöslichen Bestandteilen in das nach dem Gußverfahren hergestellte ROHACELL nur bedingt möglich. In jedem Fall ist eine Verdickung der Ansätze notwendig, um eine Sedimentation der nichtlöslichen Bestandteile während der Polymerisation zu verhindern. Dies wurde in der Vergangenheit durch vier verschiedene Möglichkeiten erreicht.

1. Durch Zugabe von Aerosil (Aerosil 200 von Degussa Hüls). Aerosil führt zu einer thixotropen Suspension. Unter Aerosil versteht man hochdisperse Siliciumdioxide.
2. Durch Zugabe von Ruß (KB 600 von AKZO Nobel). KB 600 führt zu einer thixotropen Suspension.

Keine der verwendeten Methoden führt zu einer ausreichenden Unterdrückung der Sedimentation und fanden daher in der Forschung keine weitere Beachtung.

Verfährt man nach Methode 1 und 2, macht die Einarbeitung von unlöslichen Bestandteilen aufgrund der Thixotropie der Suspension Probleme. Durch Verwendung eines Ultraturax ist zwar eine Durchmischung möglich, jedoch verbieten Rührtechniken, die wie der Ultraturax hohe Scherfelder erzeugen und auf diese Art eine hohe Energie in die Reaktionssuspension eintragen, die Einarbeitung von Initiatoren und Schwebstoffen, die nicht erhitzt bzw. zerkleinert werden dürfen. Hierzu zählen neben den bereits genannten Initiatoren beispielsweise Mikrohohlkugeln oder auch mikroverkapselte Flüssigkeiten der Festkörper.

### Aufgabe

Um ROHACELL für neue Anwendungsfelder attraktiv zu machen, ist es notwenig, seine elektrische, magnetischen oder auch Brandeigenschaften zu modifizieren. Dies kann sehr oft mit Hilfe von anorganischen oder anderen nichtlöslichen Additiven erreicht werden.

Es muß daher eine Methode entwickelt werden, die es gestattet, nicht lösliche Additive homogen verteilt in das nach dem Gußverfahren hergestellte ROHACELL einzupolymerisieren.

Die homogene Verteilung der anorganischen und der anderen nichtlöslichen Additive bewirkt, dass sich die mechanischen Eigenschaften des Körpers, herstellt mit der erfindungsgemäßen Sirupphase, nicht verschlechtern und die Eigenschaften, die durch die anorganischen und anderen nichtlöslichen Additive eingebracht werden, zum Tragen kommen. Aus diesem Grund soll eine PMI Sirupphase entwickelt werden.

**Lösung**

Denkbar ist die Lösung der oben beschriebenen Aufgabe durch Lösung eines Polymers in den zur PMI Herstellung notwendigen Monomeren. Erfingdunsgemäß zählen hierzu PMMA und oder auch PMMI (Poly-N-methylmethacrylamid), die sich in der Reihe der löslichen Polymeren besonders durch gute Einarbeitbarkeit auszeichnen.

Die Sirupphase durch Zugabe von Polymethylmethacrylat läßt sich insbesondere durch hochmolekulares Polymethylmethacrylat, letzteres insbesondere durch Emulsionspolymerisation hergestellt, realisieren. Hierzu dient beispielsweise das von Röhm hergestellte Produkt Degalan BT 310. Der Anteil an gelöstem PMMA beträgt üblicherweise zwischen 0,005 und 0,40 Gramm PMMA pro Gramm Monomergemisch, welches als Lösungsmittel fungiert.

Die Sirupphase durch Zugabe von Poly-N-methyl-methacrylimid läßt sich mit Hilfe eines Extrusionpolymerisats realisieren. Hierzu dient beispielweise das von Röhm hergestellte Produkt Pleximid 8817. PMMI - normalerweise lösemittelbeständig - ist überraschenderweise in einem Gemisch aus Methacrylnitril und Methacrylsäure löslich. Der Anteil an gelöstem PMMI beträgt üblicherweise zwischen 0,005 und 0,60 Gramm PMMI pro Gramm Monomergemisch.

Die Polymerisation wird durch die zugesetzten Polymere erwartungsgemäß nicht beeinflusst. Auch werden die mechanischen Eigenschaften durch die Zusätze nicht verändert.

**Beispiele**

*Beispiel 1:*

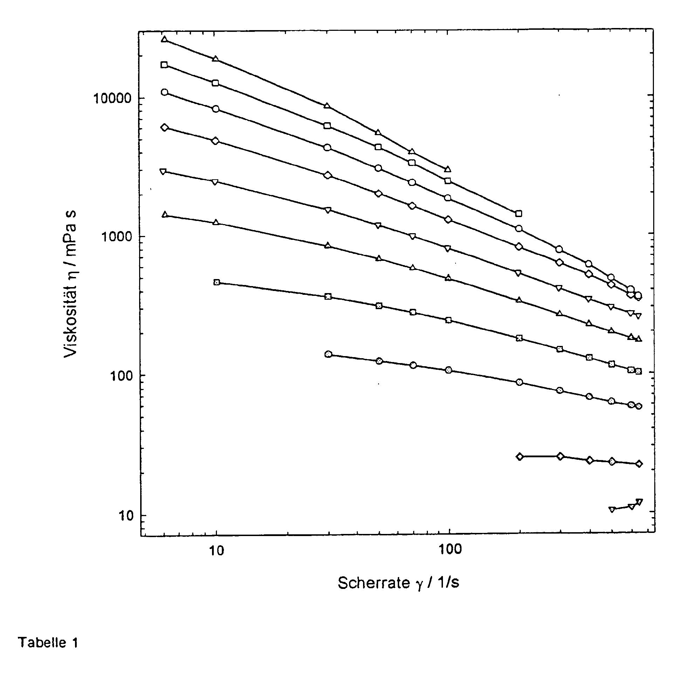

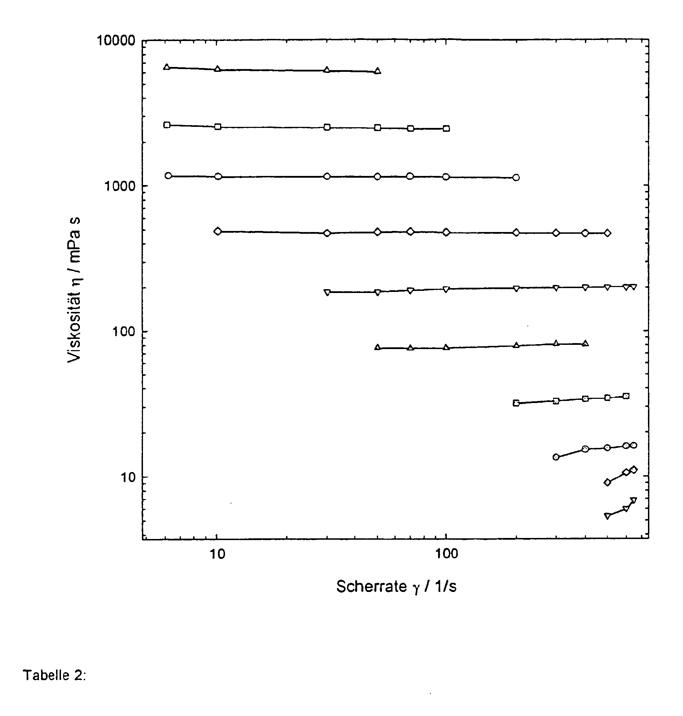

1,0 kg Polymethylmethacrylat (zahlenmittleres Molekulargewicht: $4 \times 10^6$ g/mol) wurden in einem Gemisch aus 3,1 kg Methacrylnitril und 6,9 kg Methacrylsäure gelöst. Die so hergestellte Stammlösung hatte demnach eine Polymerkonzentration von 0,1 Gramm Polymer pro Gramm Lösungsmittel. Die Stammlösung wurde ferner auf weitere Konzentrationen mit dem gleichen Lösungsmittelgemisch verdünnt. Die Viskosität der Lösungen wurde bei 23°C scherratenabhängig nach DIN 53019 bzw. ISO 3219 untersucht. Die Ergebnisse dieser Messung sind in Figur 1 dargestellt. Die hergestellten Konzentrationen c lagen bei:

$$c = 0,100 \; \frac{g_{Polymer}}{g_{Lösungsmittel}} \text{ (weise, nach oben zei-}$$

gende Dreiecke in Tabelle 1);

$$0,089 \; \frac{g_{Polymer}}{g_{Lösungsmittel}} \text{ (weise Quadrate in Tabelle}$$

$$1); \; 0,078 \; \frac{g_{Polymer}}{g_{Lösungsmittel}} \text{ (weise Kreise in Tabelle}$$

$$1); \; 0,068 \; \frac{g_{Polymer}}{g_{Lösungsmittel}} \text{ (weise Rauten in Tabelle}$$

$$1); \; 0,058 \; \frac{g_{Polymer}}{g_{Lösungsmittel}} \text{ (weise, nach unten zei-}$$

gende Dreiecke in Tabelle 1);

$$0,048 \; \frac{g_{Polymer}}{g_{Lösungsmittel}} \text{ (graue, nach oben zeigen-}$$

de Dreiecke in Tabelle 1); $0,038 \; \frac{g_{Polymer}}{g_{Lösungsmittel}}$ (graue Quadrate in Tabelle 1);

$$0,028 \; \frac{g_{Polymer}}{g_{Lösungsmittel}} \text{ (graue Kreise in Tabelle 1);}$$

$$0,019 \; \frac{g_{Polymer}}{g_{Lösungsmittel}} \text{ (graue Rauten in Tabelle 1);}$$

$$0,009 \; \frac{g_{Polymer}}{g_{Lösungsmittel}} \text{ (graue, nach unten zeigen-}$$

de Dreiecke in Tabelle 1)

*Beispiel 2:*

5,0 kg Poly-N-methyl-methacrylimid (Schmelzvolumenrate nach DIN 1133: 1 cm$^3$/min) wurden in einem Gemisch aus 4,38 kg Methacrylnitril und 5,62 g Methacrylsäure gelöst. Die so hergestellte Stammlösung hatte demnach eine Polymerkonzentration von 0,1 Gramm Polymer pro Gramm Lösungsmittel. Die Stammlösung wurde ferner auf weitere Konzentrationen mit dem gleichen Lösungsmittelgemisch verdünnt. Die Viskosität der Lösungen wurde bei 23°C scherratenabhängig nach DIN 53019 bzw. ISO 3219 untersucht. Die Ergebnisse dieser Messung sind in Tabelle 2 dargestellt. Die hergestellten Konzentrationen c lagen bei:

$$c = 0{,}50 \ \frac{g_{Polymer}}{g_{Lösungsmittel}}$$ (weise, nach oben zeigende Dreiecke in Tabelle 2); $0{,}43 \ \dfrac{g_{Polymer}}{g_{Lösungsmittel}}$ (weise Quadrate in Tabelle 2);

$0{,}36 \ \dfrac{g_{Polymer}}{g_{Lösungsmittel}}$ (weise Kreise in Tabelle 2);

$0{,}30 \ \dfrac{g_{Polymer}}{g_{Lösungsmittel}}$ (weise Rauten in Tabelle 2);

$0{,}25 \ \dfrac{g_{Polymer}}{g_{Lösungsmittel}}$ (weise, nach unten zeigende Dreiecke in Tabelle 2); $0{,}20 \ \dfrac{g_{Polymer}}{g_{Lösungsmittel}}$ (graue, nach oben zeigende Dreiecke in Tabelle 2);

$0{,}15 \ \dfrac{g_{Polymer}}{g_{Lösungsmittel}}$ (graue Quadrate in Tabelle 2);

$0{,}11 \ \dfrac{g_{Polymer}}{g_{Lösungsmittel}}$ (graue Kreise in Tabelle 2);

$0{,}07 \ \dfrac{g_{Polymer}}{g_{Lösungsmittel}}$ (graue Rauten in Tabelle 2);

$0{,}03 \ \dfrac{g_{Polymer}}{g_{Lösungsmittel}}$ (graue, nach unten zeigende Dreiecke in Tabelle 2)

*Beispiel 3:*

Zu einem Gemisch aus 5620 g Methacrylsäure, 4380 g Methacrylnitril und 20 g Allylmethacrylat wurden als Treibmittel 295 g Isopropanol und 126 g Formamid zugesetzt. Des weiteren wurden der Mischung 4 g tert.-Butylperbenzoat, 3 g tert.-Butylper-2-ethyl-hexanoat, 10 g tert.-Butylperbenzoat, 10,3 g Cumylperneodecanoat und 15 g Trennmittel (z. B. PAT 1037; Hersteller: E. und P. Würtz GmbH & Co. KG) hinzugefügt. Zur Erhöhung der Viskosität des Reaktionsgemisches wurden in dem Gemisch 6000 g Poly-N-methyl-methacrylimid (Schmelzvolumenrate nach DIN 1133: 1 cm³/min) gelöst.
Diese Mischung wurde 43h bei 40°C und anschließend 50h bei 50°C in einer aus zwei Glasplatten der Größe 50*50cm und einer 2,2cm dicken Randabdichtung gebildeten Kammer polymerisiert. Anschließend wurde das Polymerisat zur Endpolymerisation 17,25 h einem von 40°C bis 115°C reichenden Temperprogramm unterworfen. Eine nicht notwendigerweise durchzuführende, darauffolgende Schäumung erfolgte 2h bei 210 und 220°C.
Der so erhaltene Schaumstoff wies ein Raumgewicht von 65 bzw. 50 kg/m³ auf.

*Beispiel 4:*

Zu einem Gemisch aus 5620 g Methacrylsäure und 4380 g Methacrylnitril wurden als Treibmittel 295 g Isopropanol und 126 g Formamid zugesetzt. Des weiteren wurden der Mischung 4 g tert.-Butylperbenzoat, 4 g tert.-Butylper-2-ethyl-hexanoat, 10 g tert.-Butylperbenzoat, 10 g Cumylperneodecanoat und 15 g Trennmittel (z. B. PAT 1037; Hersteller: E. und P. Würtz GmbH & Co. KG) hinzugefügt.
Zur Erhöhung der Viskosität des Reaktionsgemisches wurden in dem Gemisch 4000 g Poly-N-methyl-methacrylimid (Schmelzvolumenrate nach DIN 1133: 1 cm³/min) gelöst. Als nicht lösliche Komponente wurden 1000 g des Produktes Melapur 200 der Firma DSM zugesetzt. Melapur ist Melaminpolyphosphat.
Diese Mischung wurde 92h bei 40°C und in einer aus zwei Glasplatten der Größe 50*50cm und einer 2,2cm dicken Randabdichtung gebildeten Kammer polymerisiert. Anschließend wurde das Polymerisat zur Endpolymerisation 17,25 h einem von 40°C bis 115°C reichenden Temperprogramm unterworfen. Eine nicht notwendigerweise durchzuführende, darauffolgende Schäumung erfolgte 2h bei 200; 210; 225 und 230°C.
Der so erhaltene Schaumstoff wies ein Raumgewicht von 106; 79; 60 bzw. 54 kg/m³ auf. Alle so erhaltenen Schaumstoffe zeigten keine Absetzungen der nicht löslichen Bestandteile.

*Beispiel 5:*

Zu einem Gemisch aus 5000 g Methacrylsäure, 5000 g Methacrylnitril und 17 g Allylmethacrylat wurden als Treibmittel 290 g Isopropanol und 290 g Formamid zugesetzt. Des weiteren wurden der Mischung 4 g tert.-Butylperbenzoat, 3,6 g tert.-Butylper-2-ethyl-hexanoat, 10 g tert.-Butylperbenzoat, 10,3 g Cumylperneodecanoat und 16 g Trennmittel (z. B. PAT 1037; Hersteller: E. und P. Würtz GmbH & Co. KG) hinzugefügt.
Zur Erhöhung der Viskosität des Reaktionsgemisches wurden in dem Gemisch 350 g Polymethylmethacrylat (zahlenmittleres Molekulargewicht: 4x10⁶ g/mol) gelöst.
Diese Mischung wurde 40,5 h bei 40°C und in einer aus zwei Glasplatten der Größe 50*50 cm und einer 2,2 cm dicken Randabdichtung gebildeten Kammer polymerisiert. Anschließend wurde das Polymerisat zur Endpolymerisation 17,25 h einem von 40°C bis 115°C reichenden Temperprogramm unterworfen. Eine nicht notwendigerweise durchzuführende, darauffolgende Schäumung erfolgte 2h bei 200; 220 und 230°C.
Der so erhaltene Schaumstoff wies ein Raumgewicht von 99; 52 bzw. 42 kg/m$^3$ auf.

*Beispiel 6:*

Zu einem Gemisch aus 5620 g Methacrylsäure, 4380 g Methacrylnitril und 17 g Allylmethacrylat wurden als Treibmittel 290 g Isopropanol und 290 g Formamid zugesetzt. Des weiteren wurden der Mischung 4 g tert.-Butylperbenzoat, 3,6 g tert.-Butylper-2-ethyl-hexanoat, 10 g tert.-Butylperbenzoat, 10,3 g Cumylperneodecanoat und 16 g Trennmittel (z. B. PAT 1037; Hersteller: E. und P. Würtz GmbH & Co. KG) hinzugefügt. Zur Erhöhung der Viskosität des Reaktionsgemisches wurden in dem Gemisch 350 g Polymethylmethacrylat (zahlenmittleres Molekulargewicht: 4x10$^6$ g/mol) gelöst.

Diese Mischung wurde 40,5 h bei 40°C und in einer aus zwei Glasplatten der Größe 50*50cm und einer 2,2cm dicken Randabdichtung gebildeten Kammer polymerisiert. Anschließend wurde das Polymerisat zur Endpolymerisation 17,25 h einem von 40°C bis 115°C reichenden Temperprogramm unterworfen. Eine nicht notwendigerweise durchzuführende, darauffolgende Schäumung erfolgte 2h bei 200; 220 und 230°C.

Der so erhaltene Schaumstoff wies ein Raumgewicht von 94; 51 bzw. 40 kg/m$^3$ auf.

*Beispiel 7:*

Zu einem Gemisch aus 3132 g Methacrylsäure und 2004 g Methacrylnitril wurden als Treibmittel 216 g Wasser und 242 g Formamid zugesetzt. Des weiteren wurden der Mischung 2,06 g tert.-Butylperbenzoat, 2,06 g tert.-Butylper-2-ethyl-hexanoat, 3,82 g tert.-Butylperbenzoat, 5,12 g Cumylperneodecanoat, 36 g Zinkoxid und 7,68 g Trennmittel (z. B. PAT 1037; Hersteller: E. und P. Würtz GmbH & Co. KG) hinzugefügt. Zur Erhöhung der Viskosität des Reaktionsgemisches wurden in dem Gemisch 256,5 g Polymethylmethacrylat (zahlenmittleres Molekulargewicht: 4x10$^6$ g/mol) gelöst.

Diese Mischung wurde 92h bei 41 °C und in einer aus zwei Glasplatten der Größe 50*50cm und einer 2,2cm dicken Randabdichtung gebildeten Kammer polymerisiert. Anschließend wurde das Polymerisat zur Endpolymerisation 17,25 h einem von 40°C bis 115°C reichenden Temperprogramm unterworfen. Eine nicht notwendigerweise durchzuführende, darauffolgende Schäumung erfolgte 2h bei 180°C.

Der so erhaltene Schaumstoff wies ein Raumgewicht von 60 kg/m$^3$ auf.

## Patentansprüche

**1.** Verfahren zur Herstellung eines Copolymers aus Methacrylsäure und Methacrylnitril im Gussverfahren in Gegenwart einer Sirupphase
**dadurch gekennzeichnet, dass**
als Sirupphase ein hochmolekulares Polymethylmethacrylat oder PMMI verwendet wird.

**2.** Verfahren nach Anspruch 1,
**dadurch gekennzeichnet, dass**
das Gew - Verhältnis der Methacrylsäure und Methacrylnitril zwischen 80 : 20 und 40 : 60 liegt.

**3.** Verfahren nach einem der vorstehenden Ansprüche,
**dadurch gekennzeichnet, dass**
der Anteil an Sirupphase zwischen 0,005 bis 0,6 Gramm Polymer pro Gramm Monomergemischs liegt, wobei das Monomergemisch die Summe der Masse der vinylisch ungesättigten Monomeren ausmacht.

**4.** Verfahren nach einem der vorstehenden Ansprüche,
**dadurch gekennzeichnet, dass**
das zahlenmittlere Molekulargewicht des eingesetzten PMMA zwischen 1.000.000 g/mol und 12.000.000 g/mol liegt.

**5.** Verfahren nach einem der Ansprüche 1 bis 3,
**dadurch gekennzeichnet, dass**
das zahlenmittlere Molekulargewicht des eingesetzten PMMI zwischen 50.000 g/mol und 500.000 g/mol liegt.

## Claims

**1.** Process for producing a copolymer of methacrylic acid and methacrylonitrile by the casting process in the presence of a syrup phase, **characterized in that** the syrup phase used comprises a high-molecular-weight polymethyl methacrylate or PMMI.

**2.** Process according to Claim 1, **characterized in that** the ratio by weight of the methacrylic acid and methacrylonitrile is from 80:20 to 40:60.

**3.** Process according to any of the preceding claims, **characterized in that** the proportion of syrup phase is from 0.005 to 0.6 gram of polymer per gram of monomer mixture, where the monomer mixture is the entire mass of the vinylically unsaturated monomers.

**4.** Process according to any of the preceding claims, **characterized in that** the number-average molar mass of the PMMA used is from 1 000 000 g/mol to 12 000 000 g/mol.

**5.** Process according to any of Claims 1 to 3, **characterized in that** the number-average molar mass of the PMMI used is from 50 000 g/mol to 500 000 g/mol.

**Revendications**

1. Procédé pour la production d'un copolymère d'acide méthacrylique et méthacrylonitrile dans le procédé de coulée en présence d'une phase sirop, **caractérisé en ce qu'**on utilise comme phase sirop un PMMI ou un poly (méthacrylate de méthyle) de masse moléculaire élevée.

2. Procédé selon la revendication 1, **caractérisé en ce que** le rapport pondéral de l'acide méthacrylique au méthacrylonitrile est compris entre 80:20 et 40: 60.

3. Procédé selon l'une quelconque des revendications précédentes, **caractérisé en ce que** la teneur en phase sirop est comprise entre 0,005 et 0,6 gramme de polymère par gramme de mélange de monomères, le mélange de monomère représentant la somme des masses des monomères à insaturation vinylique.

4. Procédé selon l'une quelconque des revendications précédentes, **caractérisé en ce que** la masse moléculaire moyenne en nombre du PMMA utilisé est comprise entre 1 000 000 g/mole et 12 000 000 g/ mole.

5. Procédé selon l'une quelconque des revendications 1 à 3, **caractérisé en ce que** la masse moléculaire moyenne en nombre du PMMI utilisé est comprise entre 50 000 g/mole et 500 000 g/mole.

Tabelle 1

Tabelle 2:

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 902621 A
- DE 19717483
- DE 19606530